# EUROPEAN PATENT APPLICATION

(11) **EP 4 668 627 A1**
(43) Date of publication of application: **24.12.2025**
(21) Application number: 24777820.2
(22) Date of filing: 20.03.2024
(51) Int. Cl.: H04L 1/1607

(54) **COMMUNICATION METHOD AND COMMUNICATION APPARATUS**

(30) Priority: 24.03.2023 CN 202310353895
(71) Applicant: Huawei Technologies Co., Ltd., Shenzhen, Guangdong 518129 (CN)
(72) Inventor: QIANG, Li, Shenzhen, Guangdong 518129 (CN); LIU, Nannan, Shenzhen, Guangdong 518129 (CN); LI, Bingzhao, Shenzhen, Guangdong 518129 (CN)
(74) Representative: Goddar, Heinz J.
(86) International application number: PCT/CN2024/082679
(87) International publication number: WO 2024/199031

(57) **Abstract**

This application provides a communication method and a communication apparatus. The communication method provided in this application is applied to a first device. The method includes: receiving N packets sent by a second device; and sending first information to the second device, where the first information indicates that at least one packet is successfully received, the at least one packet is included in T packets that are unsuccessfully received in the N packets, and N and T are positive integers. According to the communication method provided in this application, air interface resources can be reduced, and a data transmission rate between the first device and the second device can be increased.

## Description

This application claims priority to Chinese Patent Application No. 202310353895.6, filed with the China National Intellectual Property Administration on March 24, 2023, and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Currently, for the purpose of reliable packet transmission and the like, a receive side of a packet needs to feed back a receiving status of each packet. Specifically, for each packet, a receive end feeds back an acknowledgment (acknowledgment, ACK) to a transmit end, to indicate that the packet is successfully received, or feeds back a negative acknowledgment (non-acknowledgment, NACK) to a transmit end, to indicate that the packet is unsuccessfully received. For a packet for which a NACK is fed back, the transmit end resends the packet for which the NACK is fed back. This causes high consumption of air interface resources. Alternatively, a related parameter on a transmit side, for example, a size of a transmit window, a coding rate, and a frame rate, is adjusted accordingly, and consequently user experience is adversely affected.

### SUMMARY

This application provides a communication method and a communication apparatus, so that air interface resources can be reduced, and a data transmission rate between a first device and a second device can be increased.

According to a first aspect, this application provides a communication method, applied to a first device, including: receiving N packets sent by a second device; and sending first information to the second device, where the first information indicates that at least one packet is successfully received, the at least one packet is included in T packets that are unsuccessfully received in the N packets, and N and T are positive integers.

The first device may be a terminal device or a network device, or may be a chip in the terminal device and the network device.

It should be understood that, for a current application layer, even if a part of the received N packets are unsuccessfully received, that the application layer obtains the N packets through correct decoding may not be affected. The correct decoding may be understood as, for example, all or a part of information carried in original N packets may be restored. If the part of information carried in the original N packets is restored, user experience may be slightly degraded but use is not affected. In this application, the correct decoding is also referred to as "correct restoration", "complete restoration", "correct obtaining", "correct acquiring", "correct calculation", "correct parsing", "obtaining through parsing", and the like, and does not constitute a limitation on this application.

Therefore, in this embodiment, when the first device receives the N packets, if at least K (where K is less than N) packets in the N packets are successfully received and the N packets can be obtained through successful decoding, the first device sends the first information to the second device, where the first information indicates that the at least one packet is successfully received. The at least one packet is included in the T packets that are unsuccessfully received in the N packets.

In other words, in this embodiment, when receiving the N packets, the first device feeds back, to the second device, for at least one of the T packets that are unsuccessfully received, that the at least one packet that is unsuccessfully received is successfully received.

In this embodiment, a packet that is unsuccessfully received is also referred to as an error packet. This does not constitute a limitation on this application.

It should be understood that, because a reception success is fed back when a receiving status of the at least one packet that is unsuccessfully received is fed back, the second device does not resend the at least one packet that is unsuccessfully received. Correspondingly, the first device does not need to feed back again, after the second device resends the packet, information that indicates a successful reception or an unsuccessful reception. In this way, air interface resources can be reduced, and a data transmission rate between the first device and the second device can be increased.

With reference to the first aspect, in a possible implementation, when the at least K packets in the N packets are successfully received, information about the N packets can be successfully decoded, and the method further includes: obtaining second information, where the second information indicates any one of the following information: K, M, K/N, M/N, K/M, and M/K, M=N-K, and K and M are positive integers.

With reference to the first aspect, in a possible implementation, a packet reception success needs to be fed back for S packets in the T packets, the at least one packet is included in the S packets, and S is less than or equal to M.

In other words, in this implementation, when the first device receives the N packets, the first device feeds back that the S packets that are unsuccessfully received in the N packets are successfully received.

With reference to the first aspect, in a possible implementation, the second information is from at least one of the following: a configuration of a server, a configuration of a network device, a broadcast message of a base station, and an application layer served by the first device.

With reference to the first aspect, in a possible implementation, the S packets are first S packets that are unsuccessfully received when the first device receives the N packets, a number of each of the S packets is an odd number, a number of each of the S packets is an even number, a size of each of the S packets is in a first byte range, the S packets are first S packets whose rankings are odd numbers when the T packets are sorted based on times of unsuccessful receptions, or the S packets are first S packets whose rankings are even numbers when the T packets are sorted based on the times of the unsuccessful receptions.

With reference to the first aspect, in a possible implementation, the method further includes: determining the first information based on a first probability, where the first probability is related to M/N.

Optionally, when the first information is determined based on the first probability, the method further includes: obtaining a random number; and determining the first probability based on the random number.

According to a second aspect, this application provides a communication apparatus, including: a receiving module, configured to receive N packets sent by a second device; and a sending module, configured to send first information to the second device, where the first information indicates that at least one packet is successfully received, the at least one packet is included in T packets that are unsuccessfully received in the N packets, and N and T are positive integers.

The communication apparatus may be a terminal device or a network device, or may be a chip in the terminal device or the network device. The receiving module may be a receiver, and the sending module may be a transmitter. When the communication apparatus is the terminal device or the network device, the transmitter and the receiver may be radio frequency modules. When the communication apparatus is the chip in the terminal device or the network device, the transmitter and the receiver may be input/output interfaces, pins, circuits, or the like.

With reference to the second aspect, in a possible implementation, when at least K packets in the N packets are successfully received, information about the N packets can be successfully decoded, and the receiving module is further configured to obtain second information, where the second information indicates any one of the following information: K, M, K/N, M/N, K/M, and M/K, M=N-K, and K and M are positive integers.

With reference to the second aspect, in a possible implementation, a packet reception success needs to be fed back for S packets in the T packets, the at least one packet is included in the S packets, and S is less than or equal to M.

With reference to the second aspect, in a possible implementation, the second information is from at least one of the following: a configuration of a server, a configuration of a network device, a broadcast message of a base station, and an application layer served by a first device.

With reference to the second aspect, in a possible implementation, the S packets are first S packets that are unsuccessfully received when the first device receives the N packets, a number of each of the S packets is an odd number, a number of each of the S packets is an even number, a size of each of the S packets is in a first byte range, the S packets are first S packets whose rankings are odd numbers when the T packets are sorted based on times of unsuccessful receptions, or the S packets are first S packets whose rankings are even numbers when the T packets are sorted based on the times of the unsuccessful receptions.

With reference to the second aspect, in a possible implementation, the apparatus further includes a processing module, configured to determine the first information based on a first probability, where the first probability is related to M/N.

According to a third aspect, this application provides a communication apparatus, where the communication apparatus includes a processor and a storage medium, the storage medium stores instructions; and when the instructions are run by the processor, the method according to any one of the first aspect or the possible implementations of the first aspect is implemented.

The communication apparatus may be a terminal device or a network device, or may be a chip in the terminal device or the network device.

According to a fourth aspect, this application provides a computer-readable storage medium, where the computer-readable storage medium includes instructions; and when the instructions are run by a processor, the method according to any one of the first aspect or the possible implementations of the first aspect is implemented.

According to a fifth aspect, this application provides a computer program product, where the computer program product includes instructions; and when the instructions are run by a processor, the method according to any one of the first aspect or the possible implementations is implemented.

For technical effects brought by any one of the implementations of the second aspect to the fifth aspect, refer to the technical effects brought by any one of the possible implementations of the first aspect. Details are not described.

### BRIEF DESCRIPTION OF DRAWINGS

FIG. 1 is a diagram of a communication system according to this application;
FIG. 2 is a diagram of a protocol stack according to this application;
FIG. 3 is a diagram of a communication method according to an embodiment of this application;
FIG. 4 is a diagram of determining a packet for which a reception success is fed back according to an embodiment of this application;
FIG. 5 is a diagram of determining a packet for which a reception success is fed back according to another embodiment of this application;
FIG. 6 is a diagram of a communication apparatus according to an embodiment of this application; and
FIG. 7 is a diagram of a communication apparatus according to another embodiment of this application.

### DESCRIPTION OF EMBODIMENTS

First, before a communication method provided in this application is described, a communication system to which this application can be applied is first described.

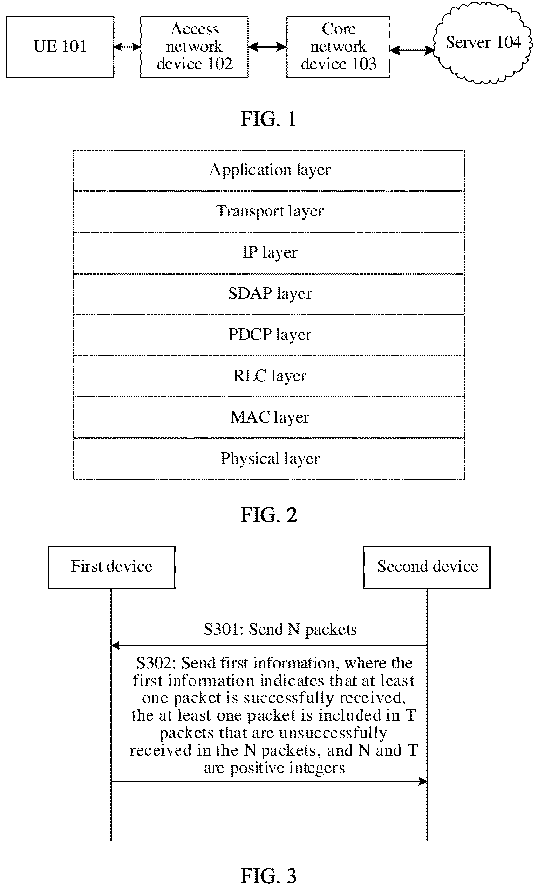

As shown in FIG. 1, network elements in the communication system include user equipment (user equipment, UE) 101, an access network (access network, AN) device 102, a core network (core network, CN) device 103, and a server 104.

The UE 101 in this embodiment of this application includes various devices having a wireless communication function, and the UE 101 may be configured to connect a person, an object, a machine, and the like. The UE may also be referred to as a terminal device, and may be widely used in various scenarios, for example, cellular communication, D2D, V2X, peer to peer (peer to peer, P2P), M2M, MTC, IoT, virtual reality (virtual reality, VR), augmented reality (augmented reality, AR), industrial control, self-driving, telemedicine, a smart grid, smart furniture, smart office, a smart wearable, smart transportation, a smart city, an uncrewed aerial vehicle, a robot, remote sensing, passive sensing, positioning, navigation, and autonomous delivery. The terminal device may be a terminal in any one of the foregoing scenarios, for example, an MTC terminal or an IoT terminal. The terminal device may be the following device of the 3rd generation partnership project (3rd generation partnership project, 3GPP) standard: user equipment (user equipment, UE), a terminal (terminal), a fixed device, a mobile station (mobile station) device or a mobile device, a subscriber unit (subscriber unit), a handheld device, a vehicle-mounted device, a wearable device, a cellular phone (cellular phone), a smart phone (smart phone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, an aircraft (for example, an uncrewed aerial vehicle, a helicopter, a multicopter, a quadcopter, or an airplane), a ship, a remote control device, a smart home device, an industrial device, an apparatus built in the foregoing device (for example, a communication module, a modem, or a chip in the foregoing device), or another processing device connected to the wireless modem. For ease of description, an example in which the terminal device is the terminal or the UE is used below for description.

In embodiments of this application, an apparatus configured to implement a function of the terminal device, namely, a terminal apparatus, may be a terminal device; or may be an apparatus, for example, a chip system or a chip, that can support the terminal device in implementing the function. The apparatus may be installed in the terminal device. In embodiments of this application, the chip system may include a chip, or may include a chip and another discrete component. A main function of the access network device 102 is to control the UE 101 to wirelessly access a mobile communication network. The access network device 102 is a part of a mobile communication system, and implements a radio access technology. For example, the access network device 102 may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (6th generation, 6G) mobile communication system, a base station in a future mobile communication system, an access node or the like in a Wi-Fi system, or a module or a unit that completes a part of functions of a base station, for example, a central unit (central unit, CU) or a distributed unit (distributed unit, DU). A radio access network device may be a macro base station, may be a micro base station or an indoor base station, or may be a relay node, a donor node, or the like. It may be understood that all or a part of functions of the radio access network device in this application may also be implemented by using a software function running on hardware, or may be implemented by using an instantiated virtualization function on a platform (for example, a cloud platform). A specific technology and a specific device form that are used by the radio access network device are not limited in embodiments of this application. For ease of description, the following provides descriptions by using an example in which the radio access network device is a base station.

The UE 101 and the access network device 102 may be deployed on land, where the deployment includes indoor, outdoor, handheld, or vehicle-mounted; may be deployed on water; or may be deployed on an airplane, a balloon, or an artificial satellite in the air. Application scenarios of the UE 101 and the access network device 102 are not limited in this embodiment of this application.

The UE 101 and the access network device 102 may communicate with each other by using a licensed spectrum or an unlicensed spectrum, or may communicate with each other by using both the licensed spectrum and the unlicensed spectrum; or may communicate with each other by using a spectrum below 6 gigahertz (gigahertz, GHz) or a spectrum above 6 GHz, or may communicate with each other by using both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem that includes the base station function herein may be a control center in application scenarios of the foregoing terminal, such as the smart grid, the industrial control, the smart transportation, and the smart city. The terminal function may be performed by a module (for example, a chip or a modem) in the terminal, or may be performed by an apparatus including the terminal function.

The core network device 103 mainly includes a user plane function (user equipment, UPF) and a control plane function of a data plane. The user plane function is mainly responsible for data packet forwarding, quality of service (quality of service, QoS) control, connection to an external network, and the like, and includes related functions of a serving gateway (serving gateway, SGW) and a public data network gateway (public data network gateway, PDN-GW) in a long term evolution (long term evolution, LTE) technology. The control plane function is mainly responsible for service procedure interaction, and delivering a data packet forwarding policy, a QoS control policy, and the like to the user plane. For example, network elements in the control plane function mainly include a mobility management function (access and mobility function, AMF), a session management function (session management function, SMF), a policy control function (policy control function, PCF), an application function (application function, AF), a network exposure function (network exposure function, NEF), and the like. The AMF network element is connected to the access network device 102 through an NG interface, and may manage access of the terminal device to a core network, for example, access control of the terminal device, mobility management of the terminal device, attachment and detachment of the terminal device, triggering an LMF network element to locate the terminal device, forwarding a positioning-related message between the terminal device and the LMF network element, and forwarding a positioning-related message between the access network device and the LMF network element. The LMF network element may locate the terminal device based on a locating request of the AMF network element. It should be understood that a function of the LMF network element herein may also be referred to as a function of an LMF. In other words, the LMF network element is configured to implement the function of the LMF. The SMF network element is mainly responsible for managing creation, deletion, and the like of a user protocol data unit (protocol data unit, PDU) session, and maintaining a PDU session context and user plane forwarding pipeline information. The PCF is mainly responsible for performing policy control, and is similar to a policy and charging rules function (policy and charging rules function, PCRF) network element in a long term evolution (long term evolution, LTE) technology, including generating and managing a user, a session, a quality of service (quality of service, QoS) flow processing policy, and quality of service, generating a charging rule, and delivering a corresponding rule to the UPF network element via the SMF. The AF network element is mainly responsible for providing functions of various services, can interact with the core network via the NEF network element, and can interact with a policy management framework to perform policy management. The NEF is configured to: provide a framework, authentication, and an interface that are related to network capability exposure, and transfer information between a network function of a 5G system and another network function.

The server 104 is a device that communicates with the UE 101, and can send, to the UE 101, service data, for example, including multicast service data. This is not limited in this embodiment of this application.

For the communication system shown in FIG. 1, when there is packet transmission between any two devices, to ensure reliability and the like of packet transmission between a transmit end and a receive end, a receive end of a packet needs to feed back a receiving status of each packet at many layers in an existing protocol stack. Specifically, for each packet, the receive end feeds back an acknowledgment (acknowledgment, ACK) to the transmit end, to indicate that the packet is successfully received, or feeds back a negative acknowledgment (non-acknowledgment, NACK) to the transmit end, to indicate that the packet is unsuccessfully received. For a packet for which a NACK is fed back, the transmit end resends the packet for which the NACK is fed back.

For example, FIG. 2 is a diagram of a protocol stack according to this application. As shown in FIG. 2, the protocol stack includes an application layer, a transport layer, an internet protocol (internet protocol, IP) layer, a service data adaptation protocol (service data adaptation protocol, SDAP) layer, a packet data convergence protocol (packet data convergence protocol, PDCP) layer, a radio link control (radio link control, RLC) layer, a medium access control (medium access control, MAC) layer, and a physical layer. It should be noted herein that the protocol stack shown in FIG. 2 is merely an example, and does not constitute a limitation on this application.

For example, in the protocol stack shown in FIG. 2, when the transport layer is a transmission control protocol (transmission control protocol, TCP), a transmit end resends a packet for which a NACK is fed back. In addition, the transmit end further reduces a size of a current TCP transmit window by half, to avoid network congestion caused by sending an extremely large quantity of packets (because it is considered in the TCP that feeding back of the NACK is caused by a packet loss due to congestion in a network).

For another example, in the protocol stack shown in FIG. 2, the RLC layer may have a plurality of modes. In an acknowledged mode (acknowledged mode, AM), an automatic repeat request (automatic repeat request, ARQ) mechanism is supported. In the ARQ mechanism, a receive end feeds back a packet receiving status, and the transmit end resends the packet for which the NACK is fed back, to improve reliability.

Similarly, in a hybrid automatic repeat request (hybrid automatic repeat request, HARQ) mechanism at the MAC layer, the packet for which the NACK is fed back may also be resent on a transmit side.

However, when the receive end and the transmit end use the foregoing manners to ensure reliability of packet transmission, consumption of air interface resources is large, and a problem like a low data transmission rate between the transmit end and the receive end may be caused.

In view of this, this application provides a communication method and a communication apparatus, to save the air interface resources and increase the data transmission rate between the transmit end and the receive end.

FIG. 3 is a schematic flowchart of a communication method according to this application. As shown in FIG. 3, the communication method includes S301 and S302.

S301: A second device sends N packets to a first device, and correspondingly, the first device receives the N packets sent by the second device.

In this embodiment, the first device is an end at which the N packets are received, that is, a receive end; and the second device is an end at which the N packets are sent, that is, a transmit end.

It should be noted herein that specific forms of the first device and the second device are not limited in this embodiment.

For example, the first device is a base station, and the second device is UE, in other words, transmission of the N packets is performed between the base station and the UE, the UE is the end at which the N packets are sent, and the base station is the end at which the N packets are received.

For example, the first device is UE, and the second device is a base station, in other words, transmission of the N packets is performed between the base station and the UE. The base station is the end at which the N packets are sent, and the UE is the end at which the N packets are received.

For example, the first device is a core network device, and the second device is a base station, in other words, transmission of the N packets is performed between the base station and the core network device. The base station is the end at which the N packets are sent, and the core network device is the end at which the N packets are received.

For example, the first device is a base station, and the second device is a core network device, in other words, transmission of the N packets is performed between the base station and the core network device, the core network device is the end at which the N packets are sent, and the base station is the end at which the N packets are received.

For example, the first device is a server, and the second device is a core network device, in other words, transmission of the N packets is performed between the server and the core network device, the core network device is the end at which the N packets are sent, and the server is the end at which the N packets are received.

For example, the first device is a core network device, and the second device is a server, in other words, transmission of the N packets is performed between the server and the core network device. The server is the end at which the N packets are sent, and the core network device is the end at which the N packets are received.

It should be noted herein that a specific form of the N packets is not limited in this embodiment.

For example, the N packets jointly carry information about one frame of picture.

For example, a total quantity of bytes in the N packets is a preset quantity of bytes. For example, the total quantity of bytes in the N packets is 1,000 bytes.

For example, a sum of duration of the N packets is less than preset duration. For example, the N packets are in 15 seconds.

S302: The first device sends first information to the second device, and correspondingly, the second device receives the first information, where the first information indicates that at least one packet is successfully received, the at least one packet is included in T packets that are unsuccessfully received in the N packets, and N and T are positive integers.

In this embodiment, a packet that is unsuccessfully received is also referred to as an error packet.

For a specific packet, generally, the packet that is not "successfully received" is "unsuccessfully received". This may specifically include but is not limited to: When all or a part of content of the packet is not received in an expected time period, the packet has not been received while a subsequent packet has been received, the packet is received but fails in integrity check, decoding, or decryption, retransmissions of the packet exceeds a maximum quantity of retransmissions, or an upper-layer protocol indicates to abandon receiving, the packet may be considered as unsuccessfully received, and the packet may be referred to as the error packet.

It should be understood that, a current application layer does not completely depend on transmission at a lower layer, but the application layer also takes an error tolerance measure, for example, implements error tolerance through a form of special encoding and the like.

Therefore, in this embodiment, when the first device receives the N packets, if at least K (where K is less than N) packets in the N packets are successfully received and the N packets can be obtained through successful decoding, that is, there may be a maximum of M=N-K packets unsuccessfully received in the N packets, the first device sends the first information to the second device. The first information may also be referred to as feedback information, and content of the first information may indicate that the at least one packet is successfully received. The at least one packet is included in the T packets that are unsuccessfully received in the N packets.

In other words, in this embodiment, when the first device receives the N packets, for at least one of the T packets that are unsuccessfully received, the first device feeds back that the at least one packet that is unsuccessfully received is successfully received.

That the N packets can be obtained through successful decoding may be understood as follows: For example, a high-definition picture has a large amount of data, and is split into dozens of to hundreds of packets for transmission (it is assumed that there are 100 packets). For the application layer, if any 80 packets in the 100 packets are successfully received, a complete picture can be obtained (or may be referred to as recovered/restored) through decoding, then it may be considered that when at least 80 packets are successfully received in the 100 packets, the 100 packets can be obtained through decoding.

During specific implementation, the first device may learn values of K and M by obtaining second information. The second information indicates any one of the following information: K, M, K/N, M/N, K/M, and M/K, M=N-K, where K and M are positive integers.

Specifically, when the second information indicates K, it may be considered that the second information indicates a smallest quantity of packets that need to be successfully received when the N packets are received.

It may be understood that in this manner, after obtaining the second information, the first device may directly obtain K based on the indication of the second information. Further, the first device may determine M based on N and K.

Specifically, when the second information indicates M, it may be considered that the second information indicates a largest quantity of packets that are allowed to be unsuccessfully received when the N packets are received.

It may be understood that in this manner, after obtaining the second information, the first device may directly obtain M based on the indication of the second information. Further, the first device may determine K based on N and M.

Specifically, when the second information indicates K/N, it may be considered that the second information indicates, when the N packets are received, a ratio of the smallest quantity of the packets that need to be successfully received to N.

It may be understood that in this manner, after obtaining the second information, the first device may first obtain K based on N and the indication of the second information. Further, M is determined based on N and K.

Alternatively, after obtaining the second information, the first device may first determine, based on K/N, when the N packets are received, a ratio, 1-K/N, of the largest quantity of the packets that are allowed by the first device to be unsuccessfully received to N. Then the first device determines K based on N and K/N, and determines M based on N and 1-K/N.

Specifically, when the second information indicates M/N, it may be considered that the second information indicates, when the N packets are received, a ratio of the largest quantity of the packets that are allowed to be unsuccessfully received to N.

It may be understood that, in this manner, after obtaining the second information, the first device may first obtain M based on N and the indication of the second information. Further, K is determined based on N and M.

Alternatively, after obtaining the second information, the first device may first determine, based on M/N, when the N packets are received, a ratio, 1-M/N, of the smallest quantity of the packets that needs to be successfully received to N. Then the first device determines M based on N and M/N, and determines M based on N and 1-M/N.

Specifically, when the second information indicates K/M, it may be considered that the second information indicates, when the N packets are received, a ratio of the smallest quantity of the packets that need to be successfully received to the largest quantity of the packets that are allowed to be unsuccessfully received.

It may be understood that, in this manner, after obtaining the second information, the first device may determine M and K jointly based on the ratio K/M that needs to be satisfied by the ratio of the smallest quantity of the packets that need to be successfully received to the largest quantity of the packets that are allowed to be unsuccessfully received, and based on a sum of the smallest quantity of the packets that need to be successfully received and the largest quantity of the packets that are allowed to be unsuccessfully received being equal to N.

Specifically, when the second information indicates M/K, it may be considered that the second information indicates, when the N packets are received, a ratio of the largest quantity of the packets that are allowed to be unsuccessfully received to the smallest quantity of the packets that need to be successfully received.

It may be understood that, in this manner, after obtaining the second information, the first device may determine M and K jointly based on the ratio M/K that needs to be satisfied by the ratio of the largest quantity of the packets that are allowed to be unsuccessfully received to the smallest quantity of the packets that need to be successfully received, and based on a sum of the smallest quantity of the packets that need to be successfully received and the largest quantity of the packets that are allowed to be unsuccessfully received being equal to N.

It should be noted herein that when the second information indicates any one of K, M, K/N, M/N, K/M, and M/K, a specific form of the second information is not limited in this embodiment.

For example, in an example, the second information is indicated information. For example, when the second information indicates K, the second information may be K; when the second information indicates M, the second information may be M; when the second information indicates K/N, the second information may be K/N; when the second information indicates M/N, the second information may be M/N; when the second information indicates K/M, the second information may be K/M; or when the second information indicates M/K, the second information may be M/K. It may be understood that when the second information is information indicated by the second information, the second information may be considered as an explicit indication.

For example, in another example, the second information is information that has a mapping relationship with information that needs to be indicated, in other words, the second information may be considered as mapping information. Then, during indication, the mapping information that has the mapping relationship with the information that needs to be indicated is sent to the first device. Correspondingly, the first device determines, based on the mapping relationship and the received mapping information, content indicated by the second information. It may be understood that this indication manner may be considered as an implicit indication.

In this application, the second information is also referred to as error tolerance parameter information.

It should be noted herein that, when the error tolerance parameter information (that is, the second information) is obtained, a specific source of the error tolerance parameter information is not limited in this embodiment. For example, the source may be at least one of the following: a configuration of a server, a configuration of a network device, and a broadcast message of a base station. In addition, it is considered that the following scenario may exist: A third device is connected to the first device, to access a network via the first device. In this scenario, the error tolerance parameter information in this application may alternatively be from an application layer served by the first device. For example, XR glasses (that is, the third device) are connected to the UE by using a Bluetooth protocol, and then access the network via the UE. In this scenario, the error tolerance parameter information may be from an application layer served by the UE. It should be understood that, in this scenario, the application layer served by the UE may be understood as a service of a current application layer of the XR glasses.

However, it should be noted that, generally, there may be error tolerance parameter information that is end-to-end and that is between the UE and an application server. If a solution in this application is used between the UE and the base station, the receive end is the UE or the base station. In this case, error tolerance parameter information that needs to be learnt by the receive end needs to be split from the error tolerance parameter information that is end-to-end.

For example, during transmission between the UE and the application server, if a percentage of errors that can be tolerated is 20% in total, a percentage of errors that can be tolerated between the UE and the base station may be only 10%, an error tolerance budget between the base station and the core network is the other 8%, and an error tolerance percentage between the core network and the application server is the last 2%. In other words, depending on two specific devices the solution of this application is used between, error tolerance parameter information that needs to be learnt by a device that is in the two devices and that serves as the receive end is a part that is of an overall error tolerance budget and that is allocated to the two devices. If there is only the error tolerance parameter information that is end-to-end, the error tolerance parameter information between the two devices needs to be first obtained through splitting.

In other words, in this embodiment, when the first device receives the N packets, even if there is at least one packet that is unsuccessfully received, because the at least one packet that is unsuccessfully received may not affect restoration of information about the N packets, when feeding back a receiving status of the at least one packet to the second device, the first device feeds back information indicating that the at least one packet is successfully received instead of information indicating that the at least one packet is unsuccessfully received.

It should be understood that, because a reception success is fed back when the receiving status of the at least one packet that is unsuccessfully received is fed back, the second device does not resend the at least one packet that is unsuccessfully received. Correspondingly, the first device does not need to feed back again, after the second device resends the packet, information that indicates a successful reception or an unsuccessful reception. In this way, air interface resources can be reduced, and a data transmission rate between the first device and the second device can be increased.

Optionally, in this application, the at least one packet for which the first information provides feedback is included in S packets, the S packets are packets that are in the T packets unsuccessfully received and for which a reception success needs to be fed back, and S is less than or equal to M.

It should be noted herein that a value relationship between T and M is not limited in this embodiment.

In an example, if a largest quantity of error packets that can be tolerated for the received 50 packets is 10 (that is, M=10), and a quantity of packets that are unsuccessfully received by the first device is greater than 10 (that is, T is greater than M), for a maximum of 10 packets that are unsuccessfully received, information that indicates a successful reception is fed back to the second device.

In another example, if a largest quantity of error packets that can be tolerated for the received 50 packets is 10 (that is, M=10), and a quantity of packets that are unsuccessfully received by the first device is less than or equal to 10 (that is, T is less than or equal to M), for all or a part of the packets that are unsuccessfully received, information that indicates a successful reception may be fed back to the second device.

It should be understood that, in this implementation, because S is less than or equal to M, even if for all the S packets, the information that indicates the successful reception is fed back, it can be ensured that the information about the N packets can be successfully decoded.

Optionally, in this application, specific positions of the S packets are not limited.

For example, the S packets are first S packets that are unsuccessfully received when the first device receives the N packets, a number of each of the S packets is an odd number, a number of each of the S packets is an even number, a size of each of the S packets is in a first byte range, the S packets are first S packets whose rankings are odd numbers when the T packets are sorted based on times of unsuccessful receptions, or the S packets are first S packets whose rankings are even numbers when the T packets are sorted based on the times of the unsuccessful receptions.

In addition, it should be noted that in this application, for the S error packets for which indications of successful receptions are fed back, the first device needs to perform a same operation as that on a correctly received packet for which an indication of a successful reception is fed back, for example, adjust a parameter of a receive window and indicate a correct reception to an upper layer.

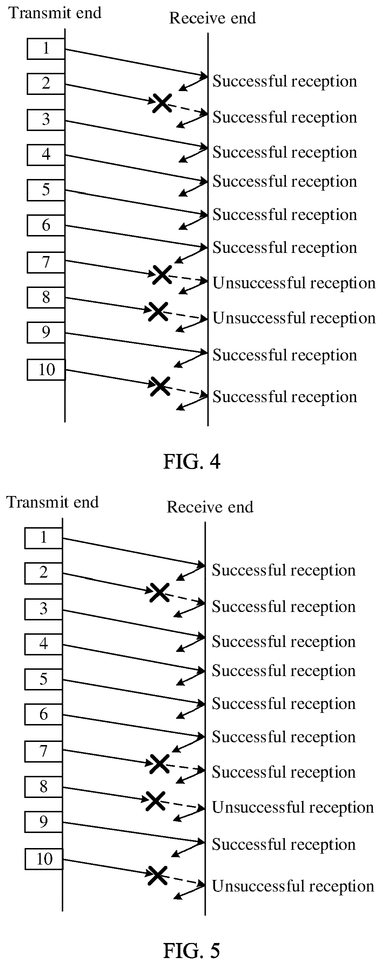

To facilitate understanding of the communication method provided in this application, the following provides two detailed embodiments with reference to FIG. 4 and FIG. 5.

It should be noted that, in the following, an example that a first device is referred to as a receive end is used for description.

### Embodiment 1

Step 1: The receive end divides packets into different sets according to a specific rule.

For example, every 10 packets form one set.

For example, packets belonging to a same frame of picture form one set. It should be understood that in this manner, quantities of packets in different sets may be different.

For example, packets occupying every 100 bytes form one set.

For example, packets received within every 15 ms form one set.

It should be noted herein that the foregoing 10, 100 bytes, and 15 ms are merely examples, and may be replaced with other values. This does not constitute a limitation on this application.

Step 2: The receive end obtains error tolerance parameter information.

The error tolerance parameter information may be used to determine a largest quantity of packets that are allowed by the receive end to be unsuccessfully received.

For descriptions of obtaining the error tolerance parameter information by the receive end, refer to the detailed descriptions in the foregoing embodiment of this application. Details are not described herein again.

Step 3: For a packet in each set, if the packet is received correctly, the receive end feeds back a reception success. If the packet is not received in a period of time, a previous packet has not been received while a subsequent packet has been received, or the packet is received but fails in decoding or integrity check, it is considered that the packet is unsuccessfully received. The packet that is unsuccessfully received is also referred to as an error packet. Then, according to some policies, S error packets for which a reception success needs to be fed back are selected from all packets that are unsuccessfully received, and for a remaining error packet that is not selected, it is determined that a reception failure needs to be fed back. A quantity of the selected error packets for which the reception success is fed back is less than or equal to a quantity of error packets that can be tolerated.

For example, as shown in FIG. 4, a transmit end sends 10 packets to the receive end, and the 10 packets are referred to as: a packet 1, a packet 2, a packet 3, a packet 4, a packet 5, a packet 6, a packet 7, a packet 8, a packet 9, and a packet 10. It is assumed that when receiving the 10 packets, the receive end can tolerate a maximum of two error packets. As shown in FIG. 4, for the packet 1, the packet 3, the packet 4, the packet 5, the packet 6, and the packet 9 that are correctly received, a reception success is fed back. Then, it is determined that, for two packets in the packet 2, the packet 7, the packet 8, and the packet 10 that are incorrectly received, a reception success is fed back, and for the remaining two packets, a reception failure is fed back. For example, as shown in FIG. 4, the packet 2 and the packet 10 may be selected to feed back a reception success for the packet 2 and the packet 10, and a reception failure may be fed back for the packet 7 and the packet 8.

It should be noted herein that the foregoing is merely an example, and a specific implementation of selecting, by the receive end from error packets, an error packet for which a reception success is fed back is not limited in this embodiment.

For example, selected error packets for which a reception success is fed back may be spaced from each other, for example, a first error packet and a third error packet.

For example, a number of a selected error packet for which a reception success is fed back is an odd number.

For example, a packet size of a selected error packet for which a reception success is fed back is in a first byte range.

Further, in this embodiment, for the selected error packet for which the reception success is fed back, the receive end should perform a same operation as that on a correctly received packet for which a reception success is fed back, for example, adjust a parameter of a receive window and indicate a correct reception to an upper layer.

It should be noted that, in this embodiment, after the S error packets for which the reception success needs to be fed back are selected from all the packets that are unsuccessfully received, a specific manner of feeding back, to the transmit end, that the S error packets are successfully received is not limited.

In an implementation, after the S error packets for which the reception success needs to be fed back are selected, S pieces of feedback information are sent to the transmit end. The S pieces of feedback information are in one-to-one correspondence with the S error packets, to indicate that the S error packets are successfully received.

For ease of understanding, FIG. 4 is used as an example. After the packet 2 and the packet 10 are selected to feed back a reception success for the packet 2 and the packet 10, two pieces of feedback information may be fed back to the transmit end. One piece of feedback information indicates that the packet 2 is successfully received, and the other piece of feedback information indicates that the packet 10 is successfully received.

In another implementation, after the S error packets for which the reception success needs to be fed back are selected, P pieces of feedback information are sent to the transmit end, where P is less than S. In other words, at least one of the P pieces of feedback information indicates that at least one error packet is successfully received.

For ease of understanding, FIG. 4 is still used as an example. After the packet 2 and the packet 10 are selected to feed back a reception success for the packet 2 and the packet 10, one piece of feedback information may be fed back to the transmit end. The piece of feedback information may indicate that the packet 2 and the packet 10 are both successfully received.

It should be noted herein that specific content of feedback information is not limited in this embodiment of this application.

For example, in the example in FIG. 4, an implementation of the feedback information is as follows: 10 bits may be included, and different bits indicate different packets. Then, information about a bit corresponding to the packet 2 and information about a bit corresponding to the packet 10 are used to indicate that a reception success is fed back for both the packet 2 and the packet 10.

It should be noted herein that the foregoing implementation of the feedback information is merely an example, and does not constitute a limitation on this application.

In this embodiment, because a reception success is fed back when a receiving status of at least one packet that is unsuccessfully received is fed back, a second device does not resend the at least one packet that is unsuccessfully received. Correspondingly, a first device does not need to feed back again, after the second device resends the packet, information that indicates a successful reception or an unsuccessful reception. In this way, air interface resources can be reduced, and a data transmission rate between the first device and the second device can be increased.

### Embodiment 2

Step 1: The receive end divides packets into different sets according to a specific rule.

Step 2: The receive end obtains error tolerance parameter information.

For detailed descriptions of step 1 and step 2, refer to related descriptions in Embodiment 1. Details are not described herein again.

Step 3: For a packet in each set, if the packet is received correctly, the receive end feeds back a reception success. If the packet is not received in a period of time, a previous packet has not been received while a subsequent packet has been received, or the packet is received but fails in decoding or integrity check, it is considered that the packet is unsuccessfully received. The packet that is unsuccessfully received is also referred to as an error packet. For first S error packets in the set, a reception success is fed back. A quantity of the error packets for which a reception success is fed back is less than or equal to a quantity of error packets that can be tolerated.

It should be noted herein that a value of S is not limited in this embodiment. However, S is not greater than a largest quantity of error packets that can be tolerated by the receive end.

For example, as shown in FIG. 5, a transmit end sends 10 packets to the receive end, and the 10 packets are referred to as: a packet 1, a packet 2, a packet 3, a packet 4, a packet 5, a packet 6, a packet 7, a packet 8, a packet 9, and a packet 10. It is assumed that when receiving the 10 packets, the receive end can tolerate a maximum of two error packets. As shown in FIG. 5, for the packet 1, the packet 3, the packet 4, the packet 5, the packet 6, and the packet 9 that are correctly received, ACKs are fed back. Then, for first two error packets, a reception success is fed back by default, to be specific, for the packet 2 and the packet 7, the reception success is fed back, and for remaining error packets, a reception failure is fed back.

Further, it should be noted that, in this embodiment, for a selected error packet for which a reception success is fed back, the receive end should perform a same operation as that on a correctly received packet for which a reception success is fed back, for example, adjust a parameter of a receive window, send an indication of a/an successful/unsuccessful reception to an upper layer of the receive end, and collect statistics on an "error rate" and the like based on a related parameter.

It may be learned that a difference between this embodiment and Embodiment 1 lies in that the receive end no longer performs a process of selecting, from the error packets, an error packet for which a reception success needs to be fed back, but considers by default that for all first S error packets in a set, a reception success needs to be fed back, and for all subsequent error packets, a reception failure is fed back. It may be understood that, in comparison with Embodiment 1, a feedback delay of an error packet can be reduced in this manner.

### Embodiment 3

Step 1: The receive end obtains error tolerance parameter information.

Step 2: Determine a first probability based on the error tolerance parameter information, where the first probability is related to M/N.

For detailed descriptions of the error tolerance parameter information, refer to related descriptions in the foregoing embodiment. Details are not described herein again.

It should be understood that, when the receive end receives the N packets, a largest quantity of error packets that can be tolerated can be determined based on M/N; or when the receive end receives the N packets, a smallest quantity of packets that need to be successfully received can be determined based on M/N.

For example, if M/N=20% (0.2), when the receive end receives 10 packets, the receive end may tolerate a maximum of two error packets, that is, a maximum of two packets in the 10 packets are allowed to be unsuccessfully received.

In this embodiment, M/N is also referred to as an error tolerance ratio.

In this embodiment, in a scenario, the first probability may be considered as a probability that a reception success is fed back when feedback is provided for a packet that is unsuccessfully received. It should be understood that, in this scenario, that the first probability is related to a value of M/N may be understood as that the first probability is equal to M/N.

In this embodiment, in another scenario, the first probability may be considered as a probability that a reception failure is fed back when feedback is provided for a packet that is unsuccessfully received. It should be understood that, in this scenario, that the first probability is related to a value of M/N may be understood as that the first probability is equal to 1-M/N.

Step 3: Determine first information based on the first probability, and provide feedback.

Content of the first information indicates that at least one packet that is unsuccessfully received is successfully received.

In this embodiment, for each packet that is unsuccessfully received, a reception success is fed back at a probability of M/N, and a reception failure is fed back at a probability of 1-M/N.

It should be understood that, in this case, the content of the first information is determined by the first probability.

For example, in an implementation solution, when the first information is in a form of a bitmap (bitmap), to feed back receiving statuses of a plurality of packets (that is, may be considered in a manner of packaging and sending), for example, if the first information includes five bits, bits at different positions indicate receiving statuses of different packets. When a value of a bit is 1, it indicates that a corresponding packet is successfully received, or when a value of a bit is 0, it indicates that a corresponding packet is unsuccessfully received. Therefore, when specific content of the five bits is determined and fed back, if a packet corresponding to a position is unsuccessfully received, the bit at the position is specifically determined to be 1 based at the probability of M/N, and is determined to be 0 based at the probability of 1-M/N. It should be noted herein that 5, 1, and 0 in this example are merely examples, and do not constitute a limitation on this application.

For example, in a second implementation solution, when the first information is used to feed back a receiving status of only one packet, content of the first information may be an ACK or a NACK for the packet. Specifically, in this manner, that the first information is the ACK is determined based on the probability of M/N, and that the first information is the NACK is determined based on the probability of 1-M/N.

It should be noted herein that the foregoing two implementation solutions are merely examples, and do not constitute a limitation on this application. For example, a receiving status of a packet is still fed back in a manner of packaging and sending, but the first information is not in a bitmap format. For example, if first 10 bits are all 1s, when the first information is fed back, 10 1s are not represented by the 10 bits, but through that 10 is directly carried.

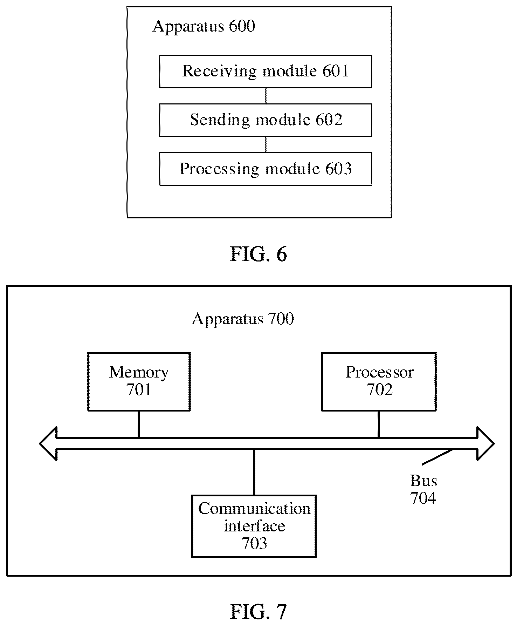

The foregoing describes, in detail, the communication method according to embodiments of this application with reference to FIG. 3 to FIG. 5. The following describes, in detail, communication apparatuses according to embodiments of this application with reference to FIG. 6 and FIG. 7.

FIG. 6 is a diagram of a structure of a communication apparatus according to an embodiment of this application. As shown in FIG. 6, an apparatus 600 includes a receiving module 601 and a sending module 602.

Specifically, in the apparatus 600, the receiving module 601 is configured to receive N packets sent by a second device; and the sending module 602 is configured to send first information to the second device, where the first information indicates that at least one packet is successfully received, the at least one packet is included in T packets that are unsuccessfully received in the N packets, and N and T are positive integers.

In a possible implementation, when at least K packets in the N packets are successfully received, information about the N packets can be successfully decoded, and the receiving module 601 is further configured to obtain second information, where the second information indicates any one of the following information: K, M, K/N, M/N, K/M, and M/K, M=N-K, and K and M are positive integers.

In a possible implementation, a packet reception success needs to be fed back for S packets in the T packets, the at least one packet is included in the S packets, and S is less than or equal to M.

In a possible implementation, the second information is from at least one of the following: a configuration of a server, a configuration of a network device, a broadcast message of a base station, and an application layer served by a first device.

In a possible implementation, the S packets are first S packets that are unsuccessfully received when the first device receives the N packets, a number of each of the S packets is an odd number, a number of each of the S packets is an even number, a size of each of the S packets is in a first byte range, the S packets are first S packets whose rankings are odd numbers when the T packets are sorted based on times of unsuccessful receptions, or the S packets are first S packets whose rankings are even numbers when the T packets are sorted based on the times of the unsuccessful receptions.

In a possible implementation, the apparatus further includes a processing module 603, configured to determine the first information based on a first probability, where the first probability is related to M/N.

FIG. 7 is a diagram of a structure of a communication apparatus according to another embodiment of this application. The apparatus shown in FIG. 7 may be configured to perform the method according to any one of the foregoing embodiments.

As shown in FIG. 7, the apparatus 700 in this embodiment includes a memory 701, a processor 702, a communication interface 703, and a bus 704. The memory 701, the processor 702, and the communication interface 703 are communicatively connected to each other through the bus 704.

The memory 701 may be a read-only memory (read-only memory, ROM), a static storage device, a dynamic storage device, or a random access memory (random access memory, RAM). The memory 701 may store a program. When the program stored in the memory 701 is executed by the processor 702, the processor 702 is configured to perform the steps of the method shown in FIG. 2.

The processor 702 may use a general-purpose central processing unit (central processing unit, CPU), a microprocessor, an application-specific integrated circuit (application-specific integrated circuit, ASIC), or one or more integrated circuits, to execute a related program, to implement the method shown in FIG. 2 in this application.

Alternatively, the processor 702 may be an integrated circuit chip, and has a signal processing capability. In an implementation process, the steps of the method in FIG. 2 in embodiments of this application may be completed by using an integrated logic circuit of hardware or instructions in a form of software in the processor 702.

The processor 702 may alternatively be a general-purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like.

The steps in the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 701. The processor 702 reads information in the memory 701, and completes, in combination with hardware of the processor 702, a function that needs to be executed by a unit included in the apparatus in this application, for example, may perform the steps or execute the functions in the embodiment shown in FIG. 2.

The communication interface 703 may use, but is not limited to, a transceiver apparatus of a transceiver type, to implement communication between the apparatus 700 and another device or a communication network.

The bus 704 may include a path for transferring information between components (for example, the memory 701, the processor 702, and the communication interface 703) of the apparatus 700.

It should be understood that, the apparatus 700 shown in this embodiment of this application may be a terminal device, or may be a chip configured in the terminal device.

All or a part of the foregoing embodiments may be implemented by using software, hardware, firmware, or any combination thereof. When the software is used for the implementation, the foregoing embodiments may be implemented completely or partially in a form of a computer program product. The computer program product includes one or more computer instructions or computer programs. When the computer instructions or the computer programs are loaded or executed on the computer, the procedure or functions according to embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually represents an "or" relationship between the associated objects, but may also represent an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one item (piece) of a, b, and c, or at least one item (piece) of a, b, or c may represent that: Only a exists, only b exists, only c exists, both a and b exist, both a and c exist, both b and c exist, or a, b, and c all exist, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular application and design constraint conditions of the technical solutions. A person skilled in the art may use different methods to implement the described functions for each particular application, but it should not be considered that the implementation goes beyond the scope of this application.

It may be clearly understood by the person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or a part of the steps of the method described in embodiments of this application. The foregoing storage medium includes any medium that can store program code, such as a USB flash disk, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first device, and comprising:
receiving N packets sent by a second device; and
sending first information to the second device, wherein the first information indicates that at least one packet is successfully received, the at least one packet is comprised in T packets that are unsuccessfully received in the N packets, and N and T are positive integers.

2. The method according to claim 1, wherein when at least K packets in the N packets are successfully received, information about the N packets can be successfully decoded, and the method further comprises:
obtaining second information, wherein the second information indicates any one of the following information: K, M, K/N, M/N, K/M, and M/K, M=N-K, and K and M are positive integers.

3. The method according to claim 2, wherein a packet reception success needs to be fed back for S packets in the T packets, the at least one packet is comprised in the S packets, and S is less than or equal to M.

4. The method according to claim 3, wherein the second information is from at least one of the following: a configuration of a server, a configuration of a network device, a broadcast message of a base station, and an application layer served by the first device.

5. The method according to claim 3 or 4, wherein the S packets are first S packets that are unsuccessfully received when the first device receives the N packets, a number of each of the S packets is an odd number, a number of each of the S packets is an even number, a size of each of the S packets is in a first byte range, the S packets are first S packets whose rankings are odd numbers when the T packets are sorted based on times of unsuccessful receptions, or the S packets are first S packets whose rankings are even numbers when the T packets are sorted based on the times of the unsuccessful receptions.

6. The method according to any one of claims 1 to 5, wherein the method further comprises:
determining the first information based on a first probability, wherein the first probability is related to M/N.

7. A communication apparatus, comprising:
a receiving module, configured to receive N packets sent by a second device; and
a sending module, configured to send first information to the second device, wherein the first information indicates that at least one packet is successfully received, the at least one packet is comprised in T packets that are unsuccessfully received in the N packets, and N and T are positive integers.

8. The apparatus according to claim 7, wherein when at least K packets in the N packets are successfully received, information about the N packets can be successfully decoded, and the receiving module is further configured to:
obtain second information, wherein the second information indicates any one of the following information: K, M, K/N, M/N, K/M, and M/K, M=N-K, and K and M are positive integers.

9. The apparatus according to claim 8, wherein a packet reception success needs to be fed back for S packets in the T packets, the at least one packet is comprised in the S packets, and S is less than or equal to M.

10. The apparatus according to claim 7, wherein the second information is from at least one of the following: a configuration of a server, a configuration of a network device, a broadcast message of a base station, and an application layer served by the first device.

11. The apparatus according to claim 9 or 10, wherein the S packets are first S packets that are unsuccessfully received when the first device receives the N packets, a number of each of the S packets is an odd number, a number of each of the S packets is an even number, a size of each of the S packets is in a first byte range, the S packets are first S packets whose rankings are odd numbers when the T packets are sorted based on times of unsuccessful receptions, or the S packets are first S packets whose rankings are even numbers when the T packets are sorted based on the times of the unsuccessful receptions.

12. The apparatus according to any one of claims 7 to 11, wherein the apparatus further comprises:
a processing module, configured to determine the first information based on a first probability, wherein the first probability is related to M/N.

13. A communication apparatus, comprising a processor and a storage medium, wherein the storage medium stores instructions; and when the instructions are run by the processor, the method according to any one of claims 1 to 6 is implemented.

14. A computer-readable storage medium, comprising instructions, wherein when the instructions are run by a processor, the method according to any one of claims 1 to 6 is implemented.

15. A computer program product, comprising instructions, wherein when the instructions are run by a processor, the method according to any one of claims 1 to 6 is implemented.
